# EUROPÄISCHE PATENTANMELDUNG

(11) **EP 1 607 171 A2**
(43) Veröffentlichungstag der Anmeldung: **21.12.2005**
(21) Anmeldenummer: 05011331.5
(22) Anmeldetag: 25.05.2005
(51) Int. Cl.: B23P 19/00, B23P 21/00, B23Q 7/14, B65G 37/02

(54) **Transfersystem insbesondere für grossvolumige Produkte**

(30) Priorität: 28.05.2004 DE 202004008691 U; 07.07.2004 DE 202004010708 U; 10.08.2004 DE 202004012571 U
(71) Anmelder: ATM Anlagentechnik und Maschinenbau AG, 91166 Georgensgmünd (DE)
(72) Erfinder: Vogel, Georg, 91166 Georgensgmünd (DE)
(74) Vertreter: LOUIS, PÖHLAU, LOHRENTZ

(57) **Zusammenfassung**

Es wird ein Transfersystem mit Produktaufnahmen zum Bearbeiten und Durchführen von Montage- und/oder Prüfvorgängen, insbesondere an großvolumigen Produkten, beschrieben, wobei die jeweilige Produktaufnahme (2) an einem auskragenden Arm (4) befestigt ist und an einem Trägerwagen (5) entlang einer Linearführung (1), von Arbeitsplatz zu Arbeitsplatz, verfahrbar ist.

## Beschreibung

Die Erfindung betrifft ein Transfersystem gemäß dem Oberbegriff des Anspruches 1 mit umlaufenden Trägerwagen.

Die Trägerwagen dienen zur Aufnahme von Werkstücken, an welchen Montagevorgänge und/oder Prüfvorgänge durchgeführt werden können. Das erfindungsgemäße Transfersystem eignet sich insbesondere für große Bauteile bzw. Werkstücke.

Bekannte Transfersystem sind üblicherweise als Transportbandsysteme ausgebildet. Dabei werden Werkstückträger, die beispielsweise in Platten- bzw. Palettenform ausgebildet sind, auf dem Transportsystem transportiert. Diese bekannten Transportsysteme laufen auf Untergestellen. Der Antrieb der Transportbandsysteme erfolgt entweder über ein Rollensystem, über Gurtbandeinrichtungen oder über einen Staurollenkettenantrieb.

Bei allen diesen bekannten Systemen ist das zu bearbeitende Werkstück bzw. das zu bearbeitende Produkt nicht optimal zugänglich. In allen Fällen muss der jeweilige Werker vor dem Transportband arbeiten und hat nur zu einer Seite des Werkstückträgers Zugang.

Sollen an großvolumigen Produkten manuelle Montagevorgänge an mehreren Seiten des Produktes durchgeführt werden, ist eine Zugänglichkeit an allen Seiten des jeweiligen Produktes nicht möglich. Es ist hierbei erforderlich, das Produkt auf dem Werkstückträger zu drehen. Die Möglichkeiten für solche Dreh- bzw. Wendevorgänge sind jedoch stark eingeschränkt. Besondere ergonomische Schwierigkeiten entstehen, wenn der Werker - durch Anforderungen des Produktionskonzeptes - mit dem Werkstück mitlaufen und während dieser Bewegung Arbeitsvorgänge durchführen soll.

In Kenntnis dieser Gegebenheiten liegt der Erfindung die Aufgabe zugrunde, ein Transfersystem der eingangs genannten Art zu schaffen, mit dem die oben genannten Mängel beseitigt werden.

Diese Aufgabe wird erfindungsgemäß durch die Merkmale des Anspruches 1 gelöst. Bevorzugte Aus- bzw. Weiterbildungen des erfindungsgemäßen Transfersystems sind in den Unteransprüchen gekennzeichnet.

Ein Ausführungsbeispiels des erfindungsgemäßen Transfersystems wird nachfolgend in Verbindung mit den anliegenden Zeichnungen beschrieben.

Es zeigen:
- Figur 1: eine schematische Ansicht des erfindungsgemäßen Transfersystems,
- Figur 2: eine der Figur 1 ähnliche Seitenansicht einer Ausbildung des erfindungsgemäßen Transfersystem,
- Figur 3: eine schematische Darstellung einer Führungsrolleneinheit des erfindungsgemäßen Transfersystem,
- Figur 4: eine schematische Darstellung eines Ketten-Antriebssystems des erfindungsgemäßen Transfersystems,
- Figur 5: eine Ansicht einer Ausbildung des Ketten-Antriebssystems des erfindungsgemäßen Transfersystems in Blickrichtung von oben, und
- Figur 6: eine Seitenansicht des Kettenantriebssystems gemäß Figur 5.

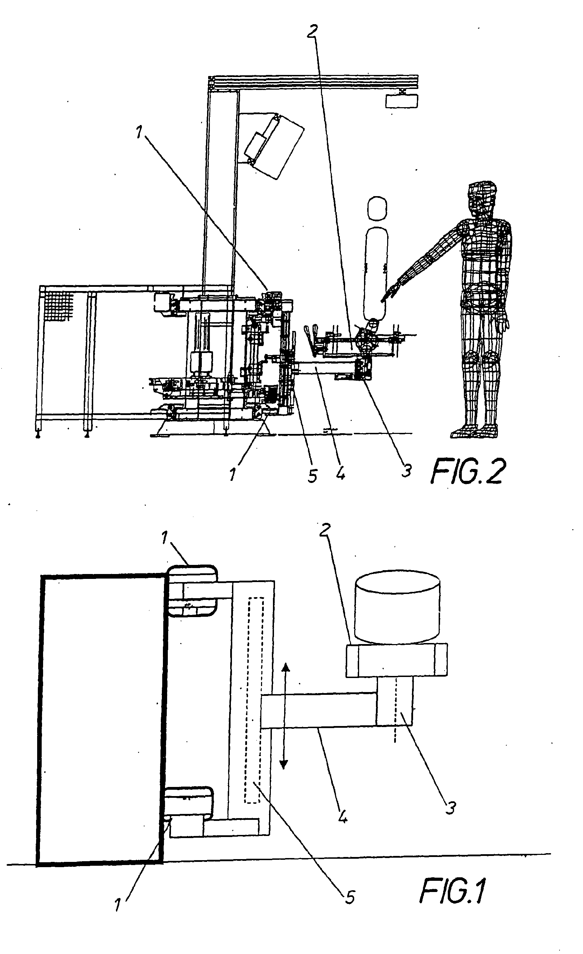

Die Figuren 1 und 2 verdeutlichen, dass das zu bearbeitende Produkt einem Werker auf einem auskragenden Arm (4) präsentiert wird. Ist das Produktionskonzept auf eine permanente Bewegung des Umlaufs ausgerichtet, kann der Werker ergonomisch günstig, vorwärtslaufend, dem Produkt folgen. Falls notwendig, ist auch eine Aufnahme, die sich in mehreren Achsen drehen und wenden lässt, anbaubar. Damit ist das zu bearbeitende Produkt ohne großen Arbeitsaufwand von allen Seiten zugänglich.

Durch einen umlaufenden Trägerwagen (5), auf dem der auskragende Arm (4) höheneinstellbar vorgesehen ist, können Montagevorgänge in beliebigen Betriebsarten durchgeführt werden.

Der fahrbare Trägerwagen (5) ist an einer Linearführung (1) längsbeweglich angebracht, um einen Weitertransport der gesamten Vorrichtung von Arbeitsplatz zu Arbeitsplatz zu ermöglichen.

Am Trägerwagen (5) ist ein Führungsschlitten senkrecht verschiebbar vorgesehen. Damit ist eine Einstellung der ergonomischen Arbeitshöhe möglich. Am Trägerwagen (5) ist ein auskragender Arm (4) für die eigentlichen Produktaufnahmen angesetzt. Am distalen Ende des Armes (4) sind optional verschiedene Achslagerungen angebracht, um Wende- und/oder Dreheinrichtungen (3) zu realisieren und der Produktaufnahme im Raum weitere Freiheitsgrade zu bieten.

Die Achslagerung kann in verschiedenen Raumrichtungen angebracht sein. Die eigentliche Produktaufnahme bzw. der eigentliche Werkstückträger (2) ist spezifisch an das jeweilige Werkstück anpassbar oder angepasst.

An Stoppstellen werden am Trägerwagen (5) entsprechende Energiezuführungen kontaktiert.

Das erfindungsgemäße Transfersystem ermöglich in vorteilhafter Weise die ergonomische Verrichtung von Prüf- und/oder Montagevorgängen oder anderer Arbeitsschritte an insbesondere großvolumigen Produkten bzw. Werkstücken während des Weitertransportes bei mitlaufendem Werker oder bei Stoppbetrieb im Stillstand.

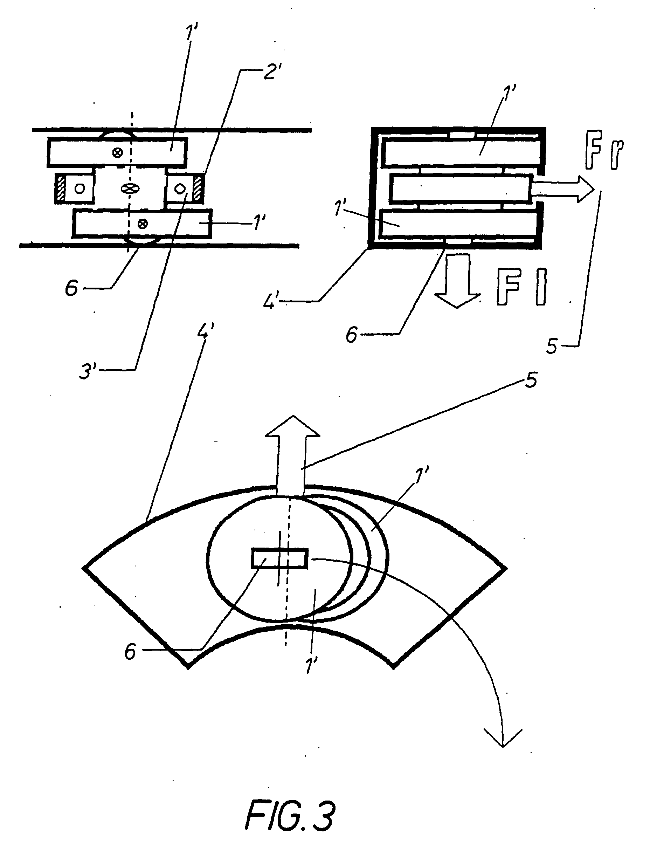

Figur 3 verdeutlicht eine Linearführung des erfindungsgemäßen Transfersystems mit einer innen geführten Führungseinheit in einem geschlossenen Profil. Das geschlossene Profil benötigt nur einen kleinen Öffnungsschlitz (Fr) zur Anbindung eines entsprechenden Trägerwagens (5).

Durch den paarweisen Einsatz solcher Rollenführungseinheiten kann eine stabil statisch definierte Führung für einen Trägerwagen (5) erreicht werden. Dabei ermöglicht die jeweilige Rollenführungseinheit des erfindungsgemäßen Transfersystems eine geschlossene Führung beispielsweise auch um 180°-Kurvenstücke.

Die Führungsrolleneinheiten sind normalerweise paarweise innerhalb der geschlossenen Führungsprofile, die als C-Profile (4) ausgebildet sind, aufgebaut. Dabei übernehmen integrierte hochbelastbare Tragrollen (6) im oberen bzw. unteren Bereich die auftretenden Gewichtskräfte (FI). Bei einer Kurvenfahrt sollen die Tragrollen (6) auf der mittleren Kurvenlinie laufen. Sie sollen im Kurvenradius mitschwenken und auf ihrer Lagerachse möglichst zum Kurvenmittelpunkt zeigen. Das wird erfindungsgemäß durch die Exzentrizität von zwei Führungsrollen (1') erreicht. Durch die gegeneinander verschobenen Anlagepunkte der beiden Führungsrollen (1') richten diese ein gelagertes inneres Rollengehäuse stets zur idealen Lauflinie aus.

An einem Außengehäuse (3') kann ein entsprechender Trägerwagen (5) angebunden sein, und kann die in der Regel durch ein Moment erzeugte Kraft Fr eingeleitet werden.

Dadurch, dass die exzentrischen Führungsrollen (1') paarweise hintereinander in dem Führungsprofil (4') vorgesehen sind, laufen die Haupt- bzw. gewichtsbelasteten Tragrollen (6) auch in der jeweiligen Kurve stets auf der Ideallinie. Die besagten Tragrollen (6) richten sich durch die Exzentrizität der beiden Führungsrollen (1') kontinuierlich passend aus.

Im Vergleich zu den meisten bekannten Führungen für umlaufende Systeme, die so ausgeführt sind, dass auf einem Führungsprofil mit verschiedenen Querschnitten - wie beispielsweise Rechteckrohren, Rundrohren, Spezialprofilen - Führungswagen am Profil außen formschlüssig mit einem Rollsystem laufen, und die kurventauglich sein sollen, und zu diesem Zwecke mehrere Gelenklager aufweisen, um Rollenpakete im Kurvenbereich an einer beweglichen Einrichtung aufzuhängen, so dass sich im personennahen Arbeitsbereich der Nachteil einer schwierigen Unfallverhütung ergibt, weist die vorliegende Erfindung den Vorteil auf, dass sie vergleichsweise einfach ausgebildet ist, wobei dieser einfache Aufbau mit dem Vorteil einer optimalen Unfallverhütung einhergeht.

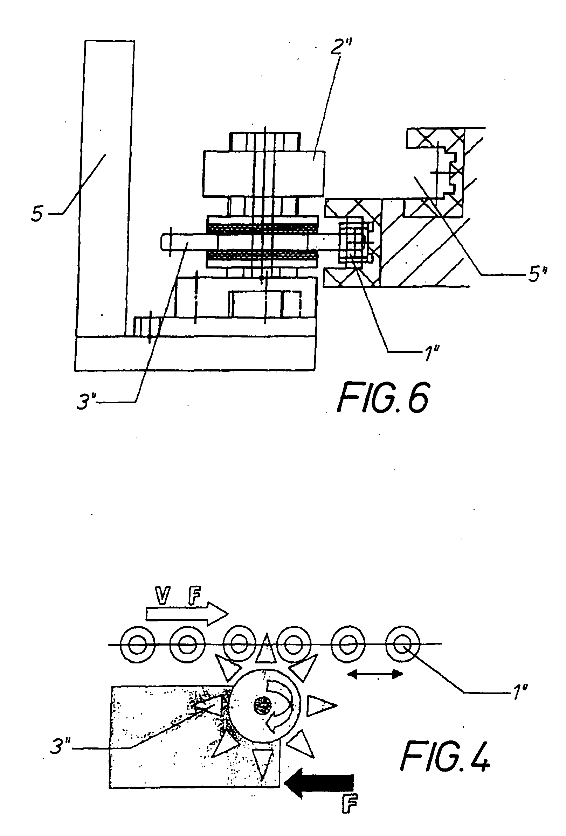

Die Figuren 4, 5 und 6 verdeutlichen eine Ausbildung des Ketten-Antriebssystems des erfindungsgemäßen Transfersystem, wobei das Ketten-Antriebssystem mindestens eine oder vorzugsweise mehrere Antriebsketten (1", 5") aufweist, die elektrisch angetrieben an einer Transferlinie an einem Vor- und Rücklauf umlaufen. Die Antriebsketten (1", 5") können jeweils variabel mit unterschiedlichen einstellbaren Geschwindigkeiten umlaufen. Die vorwärts zu bewegenden Trägerwagen (5) greifen über mindestens ein gelagertes Ritzel (3") oder alternativ über zwei gelagerte Ritzel (3") in die Antriebsketten formschlüssig ein.

Im Normalfall ist ein Mitnahmeritzel (3") mit der an der Antriebsseite zuständigen Antriebskette formschlüssig verbunden. Hierbei sind die triebstockverzahnten Mitnahmeritzel (3") in einer Sicherheitskupplung (2") mit Reibschluss oder mit magnetisch induziertem Drehmoment gelagert.

Wird der Trägerwagen (5) in seiner Bewegungsrichtung gestoppt, was in Figur 4 durch den Pfeil F verdeutlicht ist, durch ein UVV-Problem blockiert, oder mit sonstigen Hilfsmitteln angehalten, so dreht sich das Mitnahmeritzel (3") in der Rutschkupplung (2") und erzeugt eine zu definierende oder definierte Anhaftekraft.

Soll der Trägerwagen (5) in einem anderen Geschwindigkeitsbereich beispielsweise schneller bewegt werden, so geht eine andere, auf einer anderen Ebene liegende Antriebskette (1 ", 5") in Formschluss. Nachdem diese Antriebskette die Mitnahme übernommen hat, gleitet die erstere der Antriebsketten (1", 5") aus dem Formschluss und kann der Trägerwagen (5) auf eine andere Geschwindigkeit, z.B. für einen schnelleren Rücklauf, gebracht werden.

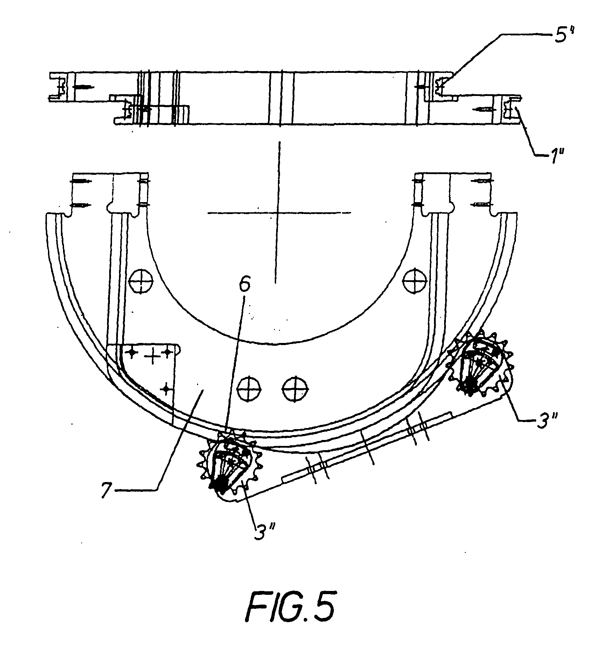

Soll der Trägerwagen (5) während einer längeren Zeitspanne blockiert werden, so wird das Mitnahmeritzel (3") zweckmäßigerweise in einer verschleißfreien Hysterese-Kupplung gelagert. Bei einem Längstransfersystem mit langsam laufender Arbeitsseite und mit schneller laufendem Rücklauf wird der Kettenformschluss an den Umlenkpunkten (7) (siehe Figur 5) von einer Antriebskette auf die andere Antriebskette gewechselt. Hierbei wird von beiden am Trägerwagen (5) befindlichen Ritzeleinheiten der Wechsel von einer auf die andere Ritzeleinheit vollzogen. Damit kann ein Trägerwagentransport an einem umlaufenden Transfersystem bei Einhaltung der UVV-Vorschriften - unter Realisierung von Stoppstellen - und mit verschiedenen Bewegungsgeschwindigkeiten realisiert werden.

Bei dem oben beschriebenen Ketten-Antriebssystem handelt es sich um ein Antriebssystem für umlaufende Trägerwagen (5) an Produktionssystemen, wie beispielsweise Montageanlagen oder Einrichtungen mit vergleichbaren Anforderungen.

Transfersystem werden bislang über reibschlüssige Verbindungen, wie z.B. Transportrollen oder Transportriemen, im Umlauf bewegt. Überschreiten die umlaufenden Trägerwagen eine bestimmte Masse oder benötigen Sie eine bestimmten Vorschubkraft, so sind reibschlüssige Mitnahmesysteme in der Regel bislang nicht mehr einsetzbar. Die dann einzusetzenden formschlüssigen Mitnahmesysteme verursachen jedoch bislang nicht zu vernachlässigende UVV-Probleme, wenn sie mit der beweglichen Transporteinrichtung fest verbunden sind. Um diese Mängel zu beseitigen und außerdem die Anforderungen zu erfüllen, an bestimmten Stellen anzuhalten, um bestimmte Vorgänge zu ermöglichen, muss der Trägerwagen (5) gestoppt werden und an seiner Position eine bestimmte variable Zeitspanne lang verharren können. Das restliche System läuft weiter.

Ein weiterer wesentlicher Vorteil des erfindungsgemäßen Ketten-Antriebssystems des erfindungsgemäßen Transfersystems besteht in der Möglichkeit, die Trägerwagen (5) an verschiedenen Abschnitten des Systems mit variablen Geschwindigkeiten vorwärts zu bewegen.

## Patentansprüche

1. Transfersystem mit Produktaufnahmen zum Bearbeiten oder Durchführen von Montage- und/oder Prüfvorgängen, insbesondere an großvolumigen Produkten,
**dadurch gekennzeichnet,**
**dass** die jeweilige Produktaufnahme (2) an einem auskragenden Arm (4) befestigt ist und an einem Trägerwagen (5) entlang einer Linearführung (1), von Arbeitsplatz zu Arbeitsplatz, verfahrbar ist.

2. Transfersystem nach Anspruch 1,
**dadurch gekennzeichnet,**
**dass** die jeweilige Produktaufnahme (2) Wende- und/oder Dreheinrichtungen (3) aufweist und zum Erreichen von ergonomischen Arbeitshöhen seitlich stufenlos höheneinstellbar angebracht ist.

3. Transfersystem nach Anspruch 1 oder 2,
**dadurch gekennzeichnet,**
**dass** der jeweilige Trägerwagen (5) mittels eines elektrischen Antriebs verfahrbar ist.

4. Transfersystem nach einem der Ansprüche 1 bis 3,
**dadurch gekennzeichnet,**
**dass** die am auskragenden Arm (4) vorgesehene Produktaufnahme (2) einem Werker im Bereich von mindestens 300° einen Zugang zu einem Werkstück ermöglicht.

5. Transfersystem nach einem der Ansprüche 1 bis 4,
**dadurch gekennzeichnet,**
**dass** die Linearführung (1) eine exzentrische Führungsrolleneinheit aufweist, die als innenliegende Rollenführungseinheit mit Führungsrollen (1') und einem C-Profil (4') kurventauglich geführt und paarweise mit dem Trägerwagen (5) verbunden ist.

6. Transfersystem nach Anspruch 5,
**dadurch gekennzeichnet,**
**dass** zwei Führungsrollen (1') exzentrisch an einem gelagerten inneren Rollengehäuse angebracht sind und dieses relativ zum C-Profil (4') ausrichten.

7. Transfersystem nach Anspruch 5,
**dadurch gekennzeichnet,**
**dass** die exzentrische Führungsrolleneinheit über das gelagerte innere Rollengehäuse paarweise an einen zugehörigen Trägerwagen (5) angebunden ist und diesen in der Ideallinie zum C-Profil (4') führt.

8. Transfersystem nach Anspruch 5,
**dadurch gekennzeichnet,**
**dass** Tragrollen (6) zur Aufnahme der Hauptlast - in einer Kurve - nahezu in Idealrichtung der Lauflinie ausgerichtet werden.

9. Transfersystem nach Anspruch 8,
**dadurch gekennzeichnet,**
**dass** der Innenteil der Führungsrolleneinheit mit den Führungsrollen (1') und den Tragrollen (6) in einem Außengehäuse (3') drehbar gelagert ist und sich so über Anlegekräfte an den Führungsrollen (1') - aus der Belastung des Trägerwagens (5) resultierend - in Kurven in der idealen Laufrichtung ausrichtet.

10. Transfersystem nach einem der Ansprüche 1 bis 9,
**dadurch gekennzeichnet,**
**dass** zum Verfahren der Trägerwagen (5) ein Ketten-Antriebssystem mit Sicherheitskupplungen und Spurwechselmöglichkeit zur Geschwindigkeitsänderung vorgesehen ist, wobei eine umlaufende Rollenkette (1") den entsprechenden Trägerwagen (5) über die formschlüssige Verbindung eines gelagerten Ritzels (3") in Richtung der Linearführung (1) bewegt.

11. Transfersystem nach Anspruch 10,
**dadurch gekennzeichnet,**
**dass** mindestens ein oder zwei gelagerte Ritzel (3") an einem Trägerwagen (5) angebracht sind und wahlweise abwechselnd in zwei mit verschiedenen Geschwindigkeiten laufende Ketten (1 ", 5") eingreifen.

12. Transfersystem nach Anspruch 10,
**dadurch gekennzeichnet,**
**dass** gelagerte Mitnahmeritzel in Sicherheitskupplungen (2") gelagert sind und so bei einer Krafteinwirkung auf den mitgenommenen Trägerwagen (5) einen Stillstand desselben erlauben und mit einem definierten Drehmoment durchrutschen.

13. Transfersystem nach Anspruch 10,
**dadurch gekennzeichnet,**
**dass** zwei auf verschiedenen Ebenen angebrachte Ritzel-Bremseinheiten den Übergang von einer Antriebskette (1", 5") auf eine andere, mit einer anderen Geschwindigkeit laufende weitere Antriebskette (1 ", 5") erlauben.

14. Transfersystem nach Anspruch 10,
**dadurch gekennzeichnet,**
**dass** die Mitnahmeritzel (3") in einer reibschlüssigen Sicherheitskupplung (2") oder in einer magnetischen Sicherheitskupplung bei einer Gegenkraft (F) auf den Trägerwagen (5) einen Stillstand desselben für eine variable Zeitspanne erlauben.

15. Transfersystem nach Anspruch 10,
**dadurch gekennzeichnet,**
**dass** mindestens eine oder mehrere Antriebsketten (1 ", 5") wechselweise auf verschiedenen Ebenen im wechselnden Formschluss mit den Mitnahmeritzeln (3") verlaufen und den Formschluss durch Zurückweichen der Kettenführung verlassen und so je Seite umlaufende Trägerwagen (5) mit verschiedenen Geschwindigkeiten bewegen können.
